# EUROPEAN PATENT SPECIFICATION

(11) **EP 4 201 709 B1**
(45) Date of publication and mention of the grant of the patent: **23.07.2025**
(21) Application number: 22210874.8
(22) Date of filing: 01.12.2022
(51) Int. Cl.: B60C 11/03, B60C 11/12

(54) **TIRE**
REIFEN
PNEUMATIQUE

(30) Priority: 21.12.2021 JP 2021207360
(43) Date of publication of application: 28.06.2023
(73) Proprietor: Sumitomo Rubber Industries, Ltd., Kobe-shi, Hyogo 651-0072 (JP)
(72) Inventor: SAKUMA, Shunya, Kobe-shi, Hyogo, 651-0072 (JP)
(74) Representative: Manitz Finsterwald Patent- und Rechtsanwaltspartnerschaft mbB

(56) References cited:
- WO-A1-2016/134990
- WO-A1-2021/089959
- WO-A1-2021/089964
- CN-A- 110 239 285
- FR-A1- 3 014 749
- FR-A1- 3 099 084

## Description

### BACKGROUND OF THE INVENTION

### Field of the Invention

The present invention relates to a tire having a tread portion including a plurality of blocks.

### Background Art

Conventionally, tires each having a tread portion including a plurality of blocks have been known. For example, Japanese Laid-Open Patent Publication No. 2016-199120 proposes a pneumatic tire in which a shape of a tilted main groove for delimiting blocks is specified so that steering stability on a dry road surface, wet performance, and on-snow performance are improved in a balanced manner.

However, in the tire in Japanese Laid-Open Patent Publication No. 2016-199120, the blocks are deformed upon braking owing to sipes traversing the blocks, whereby the braking distances of the tire on a dry road surface and a wet road surface might be elongated. In view of this, further enhancement of the braking performance on a dry road surface, the braking performance on a wet road surface, and the on-snow performance has been desired.

The present invention has been made in view of the above circumstances, and a main object of the present invention is to provide a tire that can attain both braking performance on each of a dry road surface and a wet road surface and on-snow performance. Related technologies are known from FR 3 099 084 A1, WO 2016/134990 A1, CN 110 239 285 A, WO 2021/089959 A1, WO 2021/089964 A1, and FR 3 014 749 A1.

### SUMMARY OF THE INVENTION

The present invention is set out in the appended claims. The present invention is directed to a tire according to claim 1.

Since the tire according to the present invention has the above configuration, the tire can attain both braking performance on each of a dry road surface and a wet road surface and on-snow performance.

### BRIEF DESCRIPTION OF THE DRAWINGS

FIG. 1 is a development showing a tread portion of a tire according to an embodiment of the present invention;
FIG. 2 is an enlarged view of a block in the present embodiment;
FIG. 3 is an enlarged view of a block in a second embodiment;
FIG. 4 is an enlarged view of a block in a third embodiment; and
FIG. 5 is an enlarged view of a block in a fourth embodiment.

### DETAILED DESCRIPTION

Hereinafter, an embodiment of the present invention will be described in detail with reference to the drawings.

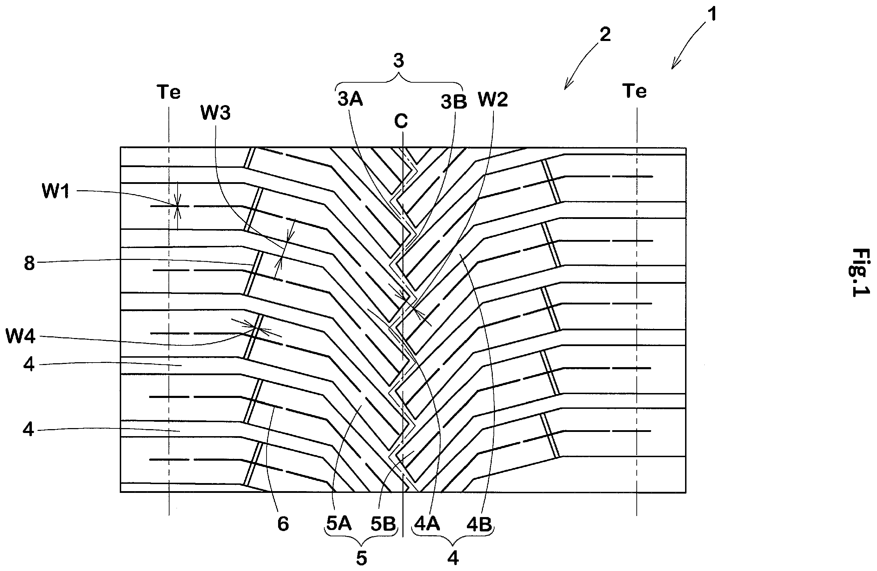

FIG. 1 is a development showing a tread portion 2 of a tire 1 according to the present embodiment. As shown in FIG. 1, the tire 1 according to the present embodiment is suitably used as a so-called tire for all seasons having the tread portion 2 suitable for running on road surfaces such as dry road surfaces, wet road surfaces, and snowy road surfaces.

In the present embodiment, a pneumatic tire for a passenger car is presented as an example of the tire 1. However, the type of the tire 1 is not limited thereto. The tire 1 may be, for example, a pneumatic tire such as a heavy-duty tire, a tire for a motorcycle, or a racing tire, or a non-pneumatic tire the inside of which is not filled with pressurized air.

The tread portion 2 in the present embodiment includes: at least one circumferential groove 3 continuously extending in a tire circumferential direction along a tire equator C; and a plurality of tilted grooves 4 continuously extending from the circumferential groove 3 to tread ends Te. Such a tread portion 2 improves drainage performance by the circumferential groove 3 and the tilted grooves 4, whereby the braking performance on a wet road surface of the tire 1 can be improved.

Here, each of the tread ends Te is, in the case of a pneumatic tire, an outermost ground contact position in a tire axial direction when: a normal load is applied to the tire 1 in a normal state; and the tire 1 is brought into contact with a flat surface at a camber angle of 0°. The center position in the tire axial direction between the tread ends Te is the tire equator C.

The "normal state" refers to a state where: the tire 1 is mounted to a normal rim and adjusted to have a normal internal pressure; and no load is applied to the tire 1.
Hereinafter, dimensions and the like of each component of the tire 1 are values measured in the normal state, unless otherwise specified.

The "normal rim" refers to a rim that is defined, in a standard system including a standard on which the tire 1 is based, by the standard for each tire. The "normal rim" is, for example, the "standard rim" in the JATMA standard, the "Design Rim" in the TRA standard, or the "Measuring Rim" in the ETRTO standard.

The "normal internal pressure" refers to an air pressure that is defined, in a standard system including a standard on which the tire 1 is based, by the standard for each tire. The "normal internal pressure" is the "maximum air pressure" in the JATMA standard, the maximum value indicated in the table "TIRE LOAD LIMITS AT VARIOUS COLD INFLATION PRESSURES" in the TRA standard, or the "INFLATION PRESSURE" in the ETRTO standard.

The "normal load" refers to a load that is defined, in a standard system including a standard on which the tire 1 is based, by the standard for each tire. The "normal load" is the "maximum load capacity" in the JATMA standard, the maximum value indicated in the table "TIRE LOAD LIMITS AT VARIOUS COLD INFLATION PRESSURES" in the TRA standard, or the "LOAD CAPACITY" in the ETRTO standard.

In the present specification, the term "along " (i.e., along a certain direction) means that many components in the direction are included as a whole, and the term encompasses the meaning that many components in a direction different from the said direction are included locally.

The tread portion 2 in the present embodiment further includes a plurality of blocks 5 each delimited by the circumferential groove 3, corresponding ones of the tilted grooves 4, and a corresponding one of the tread ends Te. Such blocks 5 have high rigidities in the tire axial direction and can improve the braking performance on each of a dry road surface and a wet road surface of the tire 1.

Each of the plurality of blocks 5 in the present embodiment has a plurality of sipes 6 extending along the tilted grooves 4. Such a block 5 can improve the on-snow performance of the tire 1 by the edge effect of the sipes 6. Here, each of the sipes 6 in the present specification means a slit having a width W1, not larger than 1.0 mm, in a direction perpendicular to a longitudinal direction.

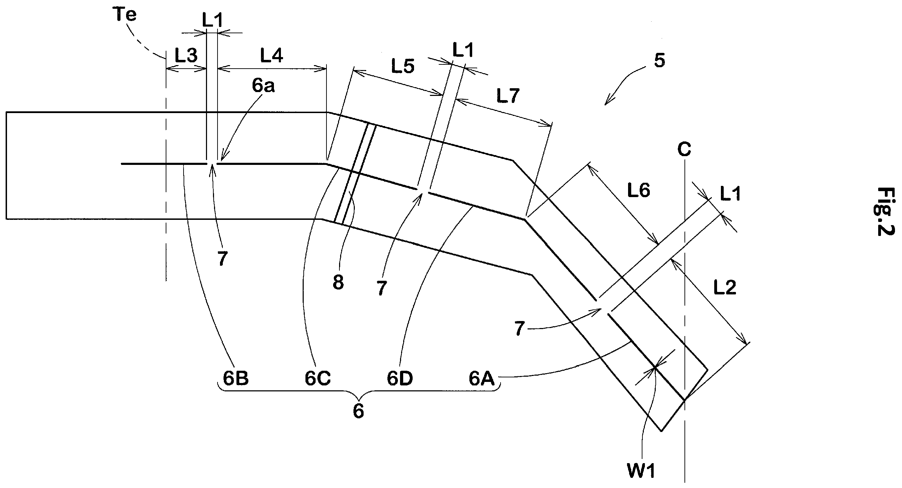

FIG. 2 is an enlarged view of the block 5 in the present embodiment. As shown in FIG. 2, the plurality of sipes 6 desirably at least include: at least one first sipe 6A located on the tire equator C side; and at least one second sipe 6B located on the tread end Te side. The sipes 6 in the present embodiment further include at least one third sipe 6C located between the first sipe 6A and the second sipe 6B in the tire axial direction.

A plurality of break portions 7 are present between the plurality of sipes 6, and thus such sipes 6 suppress decrease in the rigidity of the block 5, whereby the braking performance on each of a dry road surface and a wet road surface of the tire 1 can be improved.

In the present embodiment, an end 6a on the tread end Te side of the third sipe 6C is located on an extension line of the second sipe 6B. Such sipes 6 enable exhibition of a greater edge effect through cooperation between the second sipe 6B and the third sipe 6C without decreasing the rigidity of the block 5, whereby the on-snow performance of the tire 1 can be improved. Thus, the tire 1 according to the present embodiment can attain both braking performance on each of a dry road surface and a wet road surface and on-snow performance.

In a more preferable mode, the tread portion 2 is formed from a tread rubber having a rubber hardness of 60 to 70° as shown in FIG. 1. Such a tread portion 2 contributes to attaining both rigidity and ground contact performance in a balanced manner and attaining both braking performance on each of a dry road surface and a wet road surface and on-snow performance. Here, the rubber hardness of the tread portion 2 is a hardness measured with a type A durometer in an environment at room temperature in accordance with JIS-K6253.

The circumferential groove 3 in the present embodiment continuously extends in a zigzag manner in the tire circumferential direction. The circumferential groove 3 includes, for example, first circumferential groove portions 3A tilted to one side from the tire equator C and second circumferential groove portions 3B tilted, from the tire equator C, to a side opposite to the side to which the first circumferential groove portions 3A are tilted.

In such a circumferential groove 3, the first circumferential groove portions 3A and the second circumferential groove portions 3B are repeatedly arranged in the tire circumferential direction. Consequently, snow column shearing force can be exerted in the tire circumferential direction and the tire axial direction, whereby the on-snow performance of the tire 1 can be improved.

For the circumferential groove 3, a case where the first circumferential groove portions 3A and the second circumferential groove portions 3B include many components in the tire axial direction, is desirably encompassed. That is, the circumferential groove 3 in the present embodiment extends along the tire circumferential direction as a whole by repeatedly arranging the first circumferential groove portions 3A and the second circumferential groove portions 3B in the tire circumferential direction.

The form of the circumferential groove 3 is not limited to such a form. For example, the circumferential groove 3 may extend linearly on the tire equator C, or a pair of the circumferential grooves 3 may be provided along the tire equator C.

A groove width W2 of the circumferential groove 3 is preferably 4.0 to 7.0 mm. If the groove width W2 of the circumferential groove 3 is not smaller than 4.0 mm, drainage performance is improved, whereby the braking performance on a wet road surface of the tire 1 can be improved. From such a viewpoint, the groove width W2 of the circumferential groove 3 is more preferably not smaller than 4.5 mm.

Meanwhile, if the groove width W2 of the circumferential groove 3 is not larger than 7.0 mm, decrease in rigidity near the tire equator C is suppressed, whereby the braking performance on a dry road surface of the tire 1 can be improved. From such a viewpoint, the groove width W2 of the circumferential groove 3 is more preferably not larger than 6.0 mm. If the groove width W2 of the circumferential groove 3 varies in the longitudinal direction, the average value of the varying groove width is obtained as the groove width W2 of the circumferential groove 3.

A groove depth D1 of the circumferential groove 3 is preferably 4.0 to 8.0 mm. If the groove depth D1 of the circumferential groove 3 is not smaller than 4.0 mm, drainage performance is improved, whereby the braking performance on a wet road surface of the tire 1 can be improved. From such a viewpoint, the groove depth D1 of the circumferential groove 3 is more preferably not smaller than 5.0 mm.

Meanwhile, if the groove depth D1 of the circumferential groove 3 is not larger than 8.0 mm, decrease in rigidity near the tire equator C is suppressed, whereby the braking performance on a dry road surface of the tire 1 can be improved. From such a viewpoint, the groove depth D1 of the circumferential groove 3 is more preferably not larger than 7.0 mm. If the groove depth D1 of the circumferential groove 3 varies in the longitudinal direction, the average value of the varying groove depth is obtained as the groove depth D1 of the circumferential groove 3.

A groove width W3 of each tilted groove 4 is preferably 4.0 to 7.0 mm. If the groove width W3 of the tilted groove 4 is not smaller than 4.0 mm, drainage performance is improved, whereby the braking performance on a wet road surface of the tire 1 can be improved. From such a viewpoint, the groove width W3 of the tilted groove 4 is more preferably not smaller than 4.5 mm.

Meanwhile, if the groove width W3 of the tilted groove 4 is not larger than 7.0 mm, decrease in the rigidity of the block 5 is suppressed, whereby the braking performance on a dry road surface of the tire 1 can be improved. From such a viewpoint, the groove width W3 of the tilted groove 4 is more preferably not larger than 6.0 mm. If the groove width W3 of the tilted groove 4 varies in the longitudinal direction, the average value of the varying groove width is obtained as the groove width W3 of the tilted groove 4.

A groove depth D2 of the tilted groove 4 is preferably 4.0 to 8.0 mm. If the groove depth D2 of the tilted groove 4 is not smaller than 4.0 mm, drainage performance is improved, whereby the braking performance on a wet road surface of the tire 1 can be improved. From such a viewpoint, the groove depth D2 of the tilted groove 4 is more preferably not smaller than 5.0 mm.

Meanwhile, if the groove depth D2 of the tilted groove 4 is not larger than 8.0 mm, decrease in the rigidity of the block 5 is suppressed, whereby the braking performance on a dry road surface of the tire 1 can be improved. From such a viewpoint, the groove depth D2 of the tilted groove 4 is more preferably not larger than 7.0 mm. If the groove depth D2 of the tilted groove 4 varies in the longitudinal direction, the average value of the varying groove depth is obtained as the groove depth D2 of the tilted groove 4.

The tilted grooves 4 desirably include: a plurality of first tilted grooves 4A extending to one side in the tire axial direction relative to the tire equator C; and a plurality of second tilted grooves 4B extending to another side in the tire axial direction relative to the tire equator C so as to be tilted in a direction opposite to a direction in which each of the first tilted grooves 4A is tilted. Such tilted grooves 4 attain favorable balance in the tire axial direction and contribute to improving the braking performance on each of a dry road surface and a wet road surface of the tire 1.

Each of the first tilted grooves 4A is provided on, for example, an extension line of a corresponding one of the first circumferential groove portions 3A. Each of the second tilted grooves 4B is provided on, for example, an extension line of a corresponding one of the second circumferential groove portions 3B. Such a tread portion 2 can improve drainage performance through cooperation between the circumferential groove 3 and the tilted grooves 4, whereby the braking performance on a wet road surface of the tire 1 can be improved.

Each of the first tilted groove 4A and the second tilted groove 4B in the present embodiment includes: a crown tilted portion 4a on the tire equator C side; a shoulder tilted portion 4b on the corresponding tread end Te side; and a middle tilted portion 4c between the crown tilted portion 4a and the shoulder tilted portion 4b.

Each of the crown tilted portion 4a, the shoulder tilted portion 4b, and the middle tilted portion 4c extends linearly, for example. The shoulder tilted portion 4b extends in the tire axial direction, for example. The rigidity in the tire circumferential direction of such a tilted groove 4 can easily be set, and the tilted groove 4 contributes to improving the braking performance on each of a dry road surface and a wet road surface of the tire 1. The form of the tilted groove 4 is not limited to such a form. For example, the tilted groove 4 may be smoothly curved from the crown tilted portion 4a to the shoulder tilted portion 4b.

The blocks 5 in the present embodiment include: first blocks 5A delimited by the first tilted grooves 4A; and second blocks 5B delimited by the second tilted grooves 4B. The first blocks 5A and the second blocks 5B in the present embodiment are arranged in the tire circumferential direction in a staggered pattern. Such blocks 5 attain favorable balance in the tire axial direction and contribute to improving the braking performance on each of a dry road surface and a wet road surface.

Pitch numbers which are the numbers of the first blocks 5A and the second blocks 5B arranged in the tire circumferential direction are desirably equal to each other. Each of the pitch numbers of the first blocks 5A and the second blocks 5B is preferably 70 to 90. If the pitch number of the blocks 5 is not smaller than 70, adequate drainage performance can be maintained, whereby the braking performance on a wet road surface of the tire 1 can be improved. From such a viewpoint, the pitch number of the blocks 5 is more preferably not smaller than 75.

Meanwhile, if the pitch number of the blocks 5 is not larger than 90, the tread portion 2 can be maintained to have an adequate rigidity, whereby the braking performance on each of a dry road surface and a wet road surface of the tire 1 can be improved. From such a viewpoint, the pitch number of the blocks 5 is more preferably not larger than 85.

A land ratio of the tread portion 2 is preferably 60% to 75%. The land ratio is the proportion of the sum of the surface areas of the plurality of blocks 5 to the total surface area of the tread portion 2 in a state where all of the circumferential groove 3 and the tilted grooves 4 are filled. If the land ratio of the tread portion 2 is not lower than 60%, the tread portion 2 can be maintained to have an adequate rigidity, whereby the braking performance on each of a dry road surface and a wet road surface of the tire 1 can be improved. From such a viewpoint, the land ratio of the tread portion 2 is more preferably not lower than 65%.

Meanwhile, if the land ratio of the tread portion 2 is not higher than 75%, an adequate drainage performance can be maintained, whereby the braking performance on a wet road surface of the tire 1 can be improved. From such a viewpoint, the land ratio of the tread portion 2 is more preferably not higher than 70%.

Each of the blocks 5 may be provided with, for example, a narrow groove 8 penetrating the block in the tire circumferential direction. The narrow groove 8 desirably has a groove depth D3 smaller than the groove depth D2 of each of the tilted grooves 4. The groove depth D3 of the narrow groove 8 is preferably 20% to 30% of the groove depth D2 of the tilted groove 4.

Such a narrow groove 8 enables exhibition of the edge effect in the tire axial direction while maintaining the rigidity in the tire circumferential direction, and thus contributes to allowing the tire 1 to attain both braking performance on each of a dry road surface and a wet road surface and on-snow performance. Here, the narrow groove 8 in the present specification means a groove having a groove width W4 of 2.0 to 3.0 mm and is distinguished from the circumferential groove 3, the tilted groove 4, and the sipe 6.

The narrow groove 8 in the present embodiment allows the corresponding middle tilted portions 4c to be in communication with each other. The form of the narrow groove 8 is not limited to such a form. For example, the narrow groove 8 may allow the corresponding shoulder tilted portions 4b to be in communication with each other or may allow the corresponding shoulder tilted portion 4b and the corresponding middle tilted portion 4c to be in communication with each other.

The sipe 6 desirably extends inward in a tire radial direction so as to be bent in a zigzag manner in the tire circumferential direction, although not shown. The sipe 6 may have, for example, a three-dimensional shape as in a so-called Miura fold structure. Such a sipe 6 enables exhibition of the edge effect while maintaining the rigidity of the block 5, and thus contributes to allowing the tire 1 to attain both braking performance on each of a dry road surface and a wet road surface and on-snow performance.

A depth D4 of the sipe 6 is preferably 4.0 to 8.0 mm. If the depth D4 of the sipe 6 is not smaller than 4.0 mm, the edge effect can be assuredly exhibited, whereby the on-snow performance of the tire 1 can be improved. From such a viewpoint, the depth D4 of the sipe 6 is more preferably not smaller than 4.5 mm.

Meanwhile, if the depth D4 of the sipe 6 is not larger than 8.0 mm, the rigidity of the block 5 is inhibited from being excessively decreased, whereby the braking performance on each of a dry road surface and a wet road surface of the tire 1 can be improved. From such a viewpoint, the depth D4 of the sipe 6 is more preferably not larger than 7.5 mm.

As shown in FIG. 2, the width W1 of the sipe 6 is preferably 0.2 to 0.8 mm. If the width W1 of the sipe 6 is not smaller than 0.2 mm, the edge effect can be assuredly exhibited, whereby the on-snow performance of the tire 1 can be improved. From such a viewpoint, the width W1 of the sipe 6 is more preferably not smaller than 0.3 mm.

Meanwhile, if the width W1 of the sipe 6 is not larger than 0.8 mm, the rigidity of the block 5 is inhibited from being excessively decreased, whereby the braking performance on each of a dry road surface and a wet road surface of the tire 1 can be improved. From such a viewpoint, the width W1 of the sipe 6 is more preferably not larger than 0.5 mm.

Each of the break portions 7 between the corresponding sipes 6 has a length L1 that is 2 to 6 mm. If the length L1 of the break portion 7 is not smaller than 2 mm, the rigidity of the block 5 can be improved, whereby the braking performance on each of a dry road surface and a wet road surface of the tire 1 can be improved. From such a viewpoint, the length L1 of the break portion 7 is more preferably not smaller than 3 mm.

Meanwhile, if the length L1 of the break portion 7 is not larger than 6 mm, the lengths of the sipes 6 can be ensured, and thus the break portion 7 contributes to improving the on-snow performance of the tire 1. From such a viewpoint, the length L1 of the break portion 7 is more preferably not larger than 5 mm.

The number of the break portions 7 provided per block 5 is preferably 2 to 6. Such a block 5 enables exhibition of the edge effect while maintaining the rigidity, whereby the tire 1 can attain both braking performance on each of a dry road surface and a wet road surface and on-snow performance. From such a viewpoint, the number of the break portions 7 is more preferably 2 to 4.

The sipes 6 in the present embodiment further include at least one fourth sipe 6D located between the first sipe 6A and the third sipe 6C in the tire axial direction. Each of the plurality of blocks 5 in the present embodiment has one first sipe 6A, one second sipe 6B, one third sipe 6C, and one fourth sipe 6D. Such a block 5 enables exhibition of the edge effect of the sipes 6 while inhibiting excessive decrease in rigidity, whereby the tire 1 can attain both braking performance on each of a dry road surface and a wet road surface and on-snow performance.

The first sipe 6A is desirably in communication with the circumferential groove 3. Such a first sipe 6A makes it possible to more prominently exhibit the edge effect near the tire equator C, whereby the on-snow performance of the tire 1 can be improved.

The first sipe 6A in the present embodiment extends linearly along the first circumferential groove portion 3A and the crown tilted portion 4a. Such a first sipe 6A is easy to form, whereby manufacturing cost can be decreased.

The first sipe 6A has a length L2 that is preferably 10 to 25 mm. If the length L2 of the first sipe 6A is not smaller than 10 mm, the edge effect can be assuredly exhibited, whereby the on-snow performance of the tire 1 can be improved. From such a viewpoint, the length L2 of the first sipe 6A is more preferably not smaller than 15 mm.

Meanwhile, if the length L2 of the first sipe 6A is not larger than 25 mm, the rigidity of the block 5 is inhibited from being excessively decreased, whereby the braking performance on each of a dry road surface and a wet road surface of the tire 1 can be improved. From such a viewpoint, the length L2 of the first sipe 6A is more preferably not larger than 20 mm.

The second sipe 6B is desirably in communication with the tread end Te. Such a second sipe 6B facilitates deformation in the tire circumferential direction of the block 5 near the tread end Te. Consequently, frictional force upon braking can be improved, whereby the braking performance on each of a dry road surface and a wet road surface of the tire 1 can be improved.

The second sipe 6B in the present embodiment extends linearly along the shoulder tilted portion 4b. Such a second sipe 6B is easy to form, whereby manufacturing cost can be decreased.

The second sipe 6B desirably extends on a center line in the tire circumferential direction of the block 5. Such a second sipe 6B enables the rigidity of the block 5 to be equal between both sides in the tire circumferential direction of the second sipe 6B, whereby the braking performance on a dry road surface of the tire 1 can be improved.

The second sipe 6B has a length L3 that is preferably 5 to 12 mm. Here, although the second sipe 6B extends beyond the tread end Te, the length to the tread end Te is measured as the length L3 of the second sipe 6B.

If the length L3 of the second sipe 6B is not smaller than 5 mm, the edge effect can be assuredly exhibited, whereby the on-snow performance of the tire 1 can be improved. From such a viewpoint, the length L3 of the second sipe 6B is more preferably not smaller than 7 mm.

Meanwhile, if the length L3 of the second sipe 6B is not larger than 12 mm, the rigidity of the block 5 is inhibited from being excessively decreased, whereby the braking performance on each of a dry road surface and a wet road surface of the tire 1 can be improved. From such a viewpoint, the length L3 of the second sipe 6B is more preferably not larger than 10 mm.

The third sipe 6C in the present embodiment extends in the longitudinal direction so as to be bent along the shoulder tilted portion 4b and the middle tilted portion 4c. Such a third sipe 6C enables exhibition of the edge effect in the tire circumferential direction and the tire axial direction, whereby the on-snow performance of the tire 1 can be improved.

The third sipe 6C contributes to allowing the tire 1 to attain both braking performance on each of a dry road surface and a wet road surface and on-snow performance by adjusting, as appropriate, a ratio (L4/L5) of a length L4 of the third sipe 6C at a portion thereof extending along the shoulder tilted portion 4b to a length L5 of the third sipe 6C at a portion thereof extending along the middle tilted portion 4c. From such a viewpoint, the ratio (L4/L5) is preferably 50% to 100%.

A length (L4+L5) along the longitudinal direction of the third sipe 6C is preferably 20 to 40 mm. If the length (L4+L5) of the third sipe 6C is not smaller than 20 mm, the edge effect can be assuredly exhibited, whereby the on-snow performance of the tire 1 can be more improved. From such a viewpoint, the length (L4+L5) of the third sipe 6C is more preferably not smaller than 25 mm.

Meanwhile, if the length (L4+L5) of the third sipe 6C is not larger than 40 mm, the rigidity of the block 5 is inhibited from being excessively decreased, whereby the braking performance on each of a dry road surface and a wet road surface of the tire 1 can be improved. From such a viewpoint, the length (L4+L5) of the third sipe 6C is more preferably not larger than 35 mm.

The fourth sipe 6D in the present embodiment extends in the longitudinal direction so as to be bent along the crown tilted portion 4a and the middle tilted portion 4c. Such a fourth sipe 6D enables exhibition of the edge effect in the tire circumferential direction and the tire axial direction, whereby the on-snow performance of the tire 1 can be improved.

The fourth sipe 6D contributes to allowing the tire 1 to attain both braking performance on each of a dry road surface and a wet road surface and on-snow performance by adjusting, as appropriate, a ratio (L6/L7) of a length L6 of the fourth sipe 6D at a portion thereof extending along the crown tilted portion 4a to a length L7 of the fourth sipe 6D at a portion thereof extending along the middle tilted portion 4c. From such a viewpoint, the ratio (L6/L7) is preferably 100% to 250%.

A length (L6+L7) along the longitudinal direction of the fourth sipe 6D is preferably 25 to 50 mm. Such a fourth sipe 6D enables exhibition of the edge effect of the sipes 6 while inhibiting excessive decrease in rigidity, and thus contributes to allowing the tire 1 to attain both braking performance on each of a dry road surface and a wet road surface and on-snow performance. From such a viewpoint, the length (L6+L7) of the fourth sipe 6D is more preferably 30 to 45 mm.

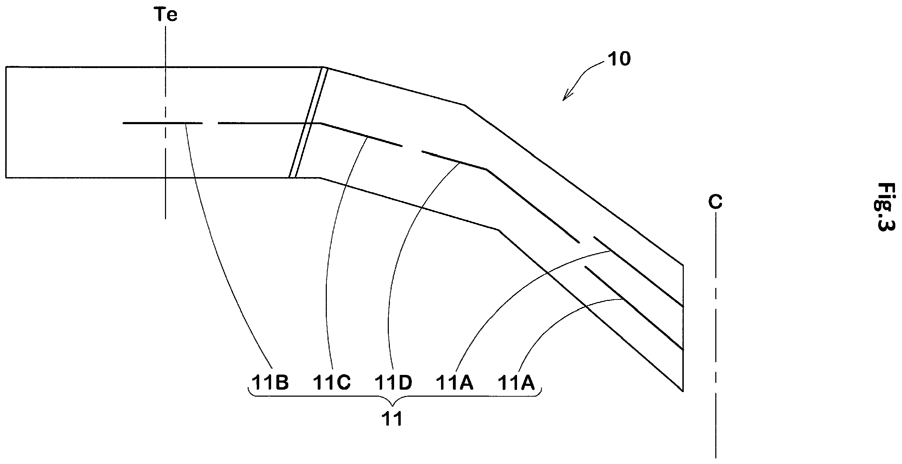

FIG. 3 is an enlarged view of a block 10 in a second embodiment. As shown in FIG. 3, the block 10 in the second embodiment has an external shape corresponding to a circumferential groove 3 (see FIG. 1) extending linearly on the tire equator C. The outer shape of the block 10 may be, for example, the same as the shape of the above block 5 corresponding to the circumferential groove 3 extending in a zigzag manner along the tire equator C.

A plurality of the blocks 10 are desirably arranged in the tire circumferential direction in the same manner as the above blocks 5. Each of the plurality of blocks 10 in the second embodiment has a plurality of sipes 11 extending along the tilted grooves 4 (shown in FIG. 1) in the same manner as the above block 5. Such a block 10 can improve the on-snow performance of the tire 1 by the edge effect of the sipes 11.

The plurality of sipes 11 in the second embodiment include: a plurality of first sipes 11A located on the tire equator C side; and at least one second sipe 11B located on the tread end Te side. The number of the first sipes 11A is desirably larger than the number of the second sipes 11B.

In such a block 10, the rigidity thereof on the tire equator C side is lower than the rigidity thereof on the tread end Te side. This can improve follow-up performance, to a road surface, on the tire equator C side on which significant influence is inflicted on the braking performance. In addition, in the block 10, the edge effect of the sipes 11 on the tire equator C side is significant, whereby the on-snow performance of the tire 1 can be more improved.

The plurality of sipes 11 in the second embodiment include two first sipes 11A, one second sipe 11B, one third sipe 11C, and one fourth sipe 11D. The shapes and the positions of the second sipe 11B, the third sipe 11C, and the fourth sipe 11D are respectively the same as those of the second sipe 6B, the third sipe 6C, and the fourth sipe 6D described above, and descriptions thereof will be omitted.

Such a block 10 enables exhibition of the edge effect of the sipes 11 while inhibiting excessive decrease in rigidity as a whole, whereby the tire 1 can attain both braking performance on each of a dry road surface and a wet road surface and on-snow performance. A plurality of the second sipes 11B, the third sipes 11C, and the fourth sipes 11D may also be provided in the same manner as the above first sipes 11A, for example.

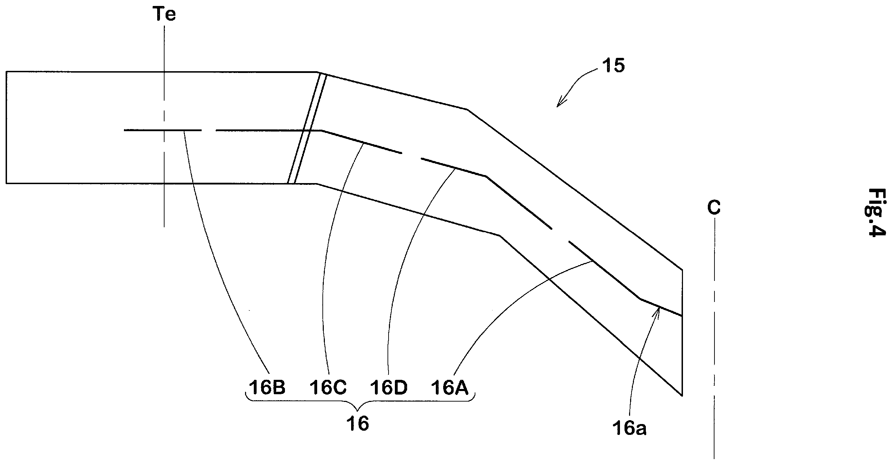

FIG. 4 is an enlarged view of a block 15 in a third embodiment. As shown in FIG. 4, the shapes and the arrangement of the blocks 15 in the third embodiment are the same as those of the above blocks 10 in the second embodiment, and descriptions thereof will be omitted.

Each of a plurality of the blocks 15 in the third embodiment has a plurality of sipes 16 extending along the tilted grooves 4 (shown in FIG. 1) in the same manner as the above block 5. Such a block 15 can improve the on-snow performance of the tire 1 by the edge effect of the sipes 16.

The plurality of sipes 16 in the third embodiment include one first sipe 16A, one second sipe 16B, one third sipe 16C, and one fourth sipe 16D. Such a block 15 enables exhibition of the edge effect of the sipes 16 while inhibiting excessive decrease in rigidity, whereby the tire 1 can attain both braking performance on each of a dry road surface and a wet road surface and on-snow performance.

The first sipe 16A in the third embodiment extends in the longitudinal direction such that an end portion 16a thereof on the tire equator C side is bent. The end portion 16a of the first sipe 16A is desirably bent in the tire axial direction. Such a first sipe 16A can increase the edge effect in the tire circumferential direction on the tire equator C side, whereby the tire 1 can attain both braking performance on each of a dry road surface and a wet road surface and on-snow performance.

The shapes and the positions of the second sipe 16B, the third sipe 16C, and the fourth sipe 16D are respectively the same as those of the second sipe 6B, the third sipe 6C, and the fourth sipe 6D described above, and descriptions thereof will be omitted.

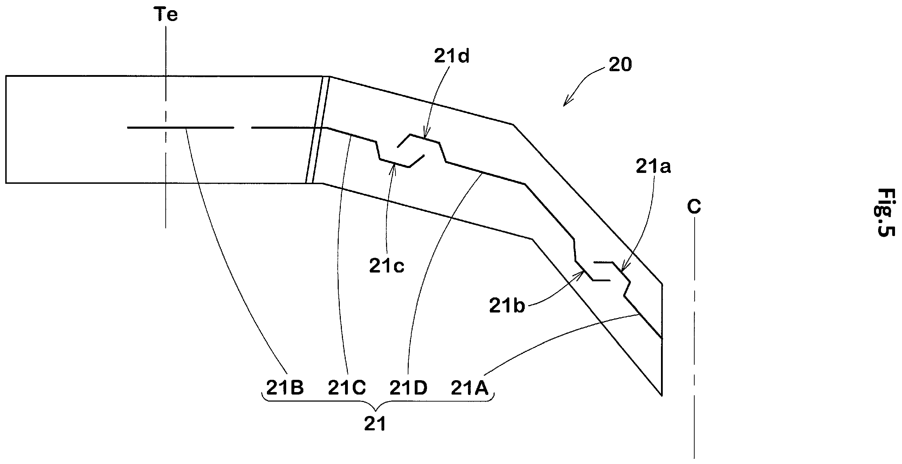

FIG. 5 is an enlarged view of a block 20 in a fourth embodiment. As shown in FIG. 5, the shapes and the arrangement of the blocks 20 in the fourth embodiment are the same as those of the above blocks 10 in the second embodiment, and descriptions thereof will be omitted.

Each of a plurality of the blocks 20 in the fourth embodiment has a plurality of sipes 21 extending along the tilted grooves 4 (shown in FIG. 1) in the same manner as the above block 5. Such a block 20 can improve the on-snow performance of the tire 1 by the edge effect of the sipes 21.

The plurality of sipes 21 in the fourth embodiment include one first sipe 21A, one second sipe 21B, one third sipe 21C, and one fourth sipe 21D. Such a block 20 enables exhibition of the edge effect of the sipes 21 while inhibiting excessive decrease in rigidity, whereby the tire 1 can attain both braking performance on each of a dry road surface and a wet road surface and on-snow performance.

The fourth embodiment employs a so-called interlocking structure in which an end portion 21a of the first sipe 21A and an end portion 21b of the fourth sipe 21D match up with each other through a plurality of bent portions thereof. Likewise, an end portion 21c of the third sipe 21C and another end portion 21d of the fourth sipe 21D also desirably match up with each other through a plurality of bent portions thereof.

Such sipes 21 make it possible to suppress deformation of the block 20 in the tire circumferential direction while improving the edge effect in the tire circumferential direction and the tire axial direction, by the bent portions. Therefore, the block 20 in the fourth embodiment enables the tire 1 to attain both braking performance on each of a dry road surface and a wet road surface and on-snow performance.

Although the particularly preferred embodiments of the present invention have been described in detail above, the present invention is not limited to the above-described embodiments, and various modifications can be made to implement the present invention.

### EXAMPLES

Tires each having the tread pattern shown in FIG. 1 were produced as samples on the basis of specifications in Table 1. By using each of the tires produced as samples, the braking performance on a dry road surface, the braking performance on a wet road surface, and the on-snow performance of the tire were tested. Main common specifications and test methods are as follows.

### <Common Specifications>

Tire size: 205/55R16 94V XL
Rim size: 16×6.5
Air pressure: 250 kPa
Test vehicle: front-wheel-drive medium-size passenger car
Rubber hardness of tread portion: 65°
Groove depth of circumferential groove: 8.0 mm
Groove depth of tilted groove: 8.0 mm
Pitch number of blocks: 80
Land ratio of tread portion: 62%

### <Braking Performance on Dry Road Surface>

Each set of test tires was mounted on all the wheels of the test vehicle. By using this test vehicle, a test of measuring the distance run until the test vehicle had stopped from 100 km per hour was performed ten times on a test course having a dry road surface. The average of the distances obtained in the ten times of tests was calculated. The result of the calculation is indicated as an index with the result of comparative example 1 being regarded as 100. A larger numerical value indicates a better braking performance on the dry road surface.

### <Braking Performance on Wet Road Surface>

Each set of test tires was mounted on all the wheels of the test vehicle. By using this test vehicle, a test of measuring the distance run until the test vehicle had stopped from 80 km per hour was performed ten times on a test course having a wet road surface. The average of the distances obtained in the ten times of tests was calculated. The result of the calculation is indicated as an index with the result of comparative example 1 being regarded as 100. A larger numerical value indicates a better braking performance on the wet road surface.

### <On-Snow Performance>

Each set of test tires was mounted on all the wheels of the test vehicle. By using this test vehicle, a test of measuring the distance run when the test vehicle had accelerated to 40 km per hour from a stopped state was performed ten times on a test course having a snowy road surface. The average of the distances obtained in the ten times of tests was calculated. The result of the calculation is indicated as an index with the result of comparative example 1 being regarded as 100. A larger numerical value indicates a better on-snow performance.

The results of the tests are indicated in Table 1.

**[Table 1]**

| | Comparative example 1 | Comparative example 2 | Example 1 | Example 2 | Example 3 | Example 4 | Example 5 | Example 6 | Example 7 | Example 8 |
|---|---|---|---|---|---|---|---|---|---|---|
| Number of break portions | 0 | 3 | 3 | 3 | 3 | 3 | 3 | 3 | 3 | 3 |
| Second sipe and third sipe | - | Displaced | On extension line | On extension line | On extension line | On extension line | On extension line | On extension line | On extension line | On extension line |
| Sipe and circumferential groove | In communication | Not in communication | In communication | Not in communication | In communication | In communication | In communication | In communication | In communication | In communication |
| Sipe and tread end | In communication | Not in communication | In communication | In communication | Not in communication | In communication | In communication | In communication | In communication | In communication |
| Position of sipe relative to block center line | On center line | On center line | On center line | On center line | On center line | Displaced | On center line | On center line | On center line | On center line |
| Number of first sipes | - | 1 | 1 | 1 | 1 | 1 | 2 | 1 | 1 | 1 |
| Bent portion of first sipe | - | Absent | Absent | Absent | Absent | Absent | Absent | Present | Absent | Absent |
| Miura fold structure of sipe | Present | Present | Present | Present | Present | Present | Present | Present | Absent | Present |
| Interlocking structure of sipe | - | Absent | Absent | Absent | Absent | Absent | Absent | Absent | Absent | Present |
| Braking performance on dry road surface (index) | 100 | 95 | 110 | 110 | 105 | 105 | 115 | 115 | 105 | 115 |
| Braking performance on wet road surface (index) | 100 | 95 | 110 | 110 | 105 | 110 | 115 | 115 | 105 | 115 |
| On-snow performance (index) | 100 | 105 | 105 | 100 | 105 | 105 | 110 | 105 | 100 | 110 |

As a result of the tests, since each of the tires in the examples has a better braking performance on each of the dry road surface and the wet road surface than the tires in the comparative examples and ensures an on-snow performance equivalent to those of the tires in the comparative examples, it has been confirmed that each of the tires in the examples attains both braking performance on each of a dry road surface and a wet road surface and on-snow performance.

## Claims

1. A tire (1) comprising a tread portion (2), the tread portion (2) comprising:
at least one circumferential groove (3) continuously extending in a tire circumferential direction along a tire equator (C);
a plurality of tilted grooves (4) continuously extending from the circumferential groove (3) to tread ends (Te); and
a plurality of blocks (5, 10, 15, 20) each delimited by the circumferential groove (3), corresponding ones of the tilted grooves (4), and a corresponding one of the tread ends (Te), wherein
each of the plurality of blocks (5, 10, 15, 20) has a plurality of sipes (6, 11, 16, 21) extending along the tilted grooves (4),
the plurality of sipes (6, 11, 16, 21) at least include
at least one first sipe (6A, 11A, 16A, 21A) located on the tire equator (C) side, and
at least one second sipe (6B, 11B, 16B, 21B) located on the tread end (Te) side, and
**characterized in that**
the plurality of sipes (6, 11, 16, 21) further include
at least one third sipe (6C, 11C, 16C, 21C) located between the first sipe (6A, 11A, 16A, 21A) and the second sipe (6B, 11B, 16B, 21B) in a tire axial direction, and extending in a longitudinal direction so as to be bent;
an end (6a) on the tread end (Te) side of the third sipe (6C, 11C, 16C, 21C) is located on an extension line of the second sipe (6B, 11B, 16B, 21B);
wherein a break portion (7) is provided between each pair of neighboring sipes of the plurality of sipes (6, 11, 16, 21) and the length (L1) of each break is in a range of 2 to 6 mm.

2. The tire (1) according to claim 1, wherein
the second sipe (6B, 11B, 16B, 21B) is in communication with the tread end (Te).

3. The tire (1) according to claim 1 or 2, wherein
the second sipe (6B, 11B, 16B, 21B) extends linearly.

4. The tire (1) according to any one of claims 1 to 3, wherein
the second sipe (6B, 11B, 16B, 21B) extends on a center line in the tire circumferential direction of the block (5, 10, 15, 20).

5. The tire (1) according to any one of claims 1 to 4, wherein
the first sipe (6A, 11A, 16A, 21A) is in communication with the circumferential groove (3).

6. The tire (1) according to any one of claims 1 to 5, wherein
each of the plurality of blocks (10) has a plurality of the first sipes (11A).

7. The tire (1) according to any one of claims 1 to 6, wherein
the first sipe (16A) extends in a longitudinal direction so as to be bent.

8. The tire (1) according to any one of claims 1 to 7, wherein
the sipes (6, 11, 16, 21) further include at least one fourth sipe (6D, 11D, 16D, 21D) located between the first sipe (6A, 11A, 16A, 21A) and the third sipe (6C, 11C, 16C, 21C) in the tire axial direction.

9. The tire (1) according to claim 8, wherein
an end portion (21a) of the first sipe (21A) and an end portion (21b) of the fourth sipe (21D) match up with each other through a plurality of bent portions thereof.

10. The tire (1) according to any one of claims 1 to 9, wherein
each of the sipes (6, 11, 16, 21) extends inward in a tire radial direction so as to be bent in a zigzag manner in the tire circumferential direction.

11. The tire (1) according to any one of claims 1 to 10, wherein
the tilted grooves (4) include
a plurality of first tilted grooves (4A) extending to one side in the tire axial direction relative to the tire equator (C), and
a plurality of second tilted grooves (4B) extending to another side in the tire axial direction relative to the tire equator (C) so as to be tilted in a direction opposite to a direction in which each of the first tilted grooves (4A) is tilted.

## Patentansprüche

1. Reifen (1), umfassend einen Laufflächenabschnitt (2), wobei der Laufflächenabschnitt (2) umfasst:
mindestens eine Umfangsrille (3), die sich kontinuierlich in einer Reifenumfangsrichtung entlang eines Reifenäquators (C) erstreckt;
eine Vielzahl von geneigten Rillen (4), die sich kontinuierlich von der Umfangsrille (3) zu Laufflächenenden (Te) erstrecken; und
eine Vielzahl von Blöcken (5, 10, 15, 20), die jeweils durch die Umfangsrille (3), entsprechende der geneigten Rillen (4) und ein entsprechendes der Laufflächenenden (Te) begrenzt sind, wobei
jeder der Vielzahl von Blöcken (5, 10, 15, 20) eine Vielzahl von Feinschnitten (6, 11, 16, 21) aufweist, die sich entlang der geneigten Rillen (4) erstrecken,
die Vielzahl von Feinschnitten (6, 11, 16, 21) mindestens umfassen
mindestens einen ersten Feinschnitt (6A, 11A, 16A, 21A), der sich auf der Seite des Reifenäquators (C) befindet, und
mindestens einen zweiten Feinschnitt (6B, 11B, 16B, 21B), der sich auf der Seite des Laufflächenendes (Te) befindet, und
**dadurch gekennzeichnet, dass**
die Vielzahl von Feinschnitten (6, 11, 16, 21) ferner umfassen
mindestens einen dritten Feinschnitt (6C, 11C, 16C, 21C), der sich zwischen dem ersten Feinschnitt (6A, 11A, 16A, 21A) und dem zweiten Feinschnitt (6B, 11B, 16B, 21B) in einer Reifenaxialrichtung befindet und sich in einer Längsrichtung so erstreckt, dass er gebogen ist;
ein Ende (6a) auf der Seite des Laufflächenendes (Te) des dritten Feinschnitts (6C, 11C, 16C, 21C) sich auf einer Verlängerungslinie des zweiten Feinschnitts (6B, 11B, 16B, 21B) befindet,
wobei ein Unterbrechungsabschnitt (7) zwischen jedem Paar benachbarter Feinschnitte der Vielzahl von Feinschnitten (6, 11, 16, 21) vorgesehen ist und die Länge (L1) jeder Unterbrechung in einem Bereich von 2 bis 6 mm liegt.

2. Reifen (1) nach Anspruch 1, wobei der zweite Feinschnitt (6B, 11B, 16B, 21B) mit dem Laufflächenende (Te) in Verbindung steht.

3. Reifen (1) nach Anspruch 1 oder 2, wobei der zweite Feinschnitt (6B, 11B, 16B, 21B) sich linear erstreckt.

4. Reifen (1) nach einem der Ansprüche 1 bis 3, wobei der zweite Feinschnitt (6B, 11B, 16B, 21B) sich auf einer Mittellinie in der Reifenumfangsrichtung des Blocks (5, 10, 15, 20) erstreckt.

5. Reifen (1) nach einem der Ansprüche 1 bis 4, wobei der erste Feinschnitt (6A, 11A, 16A, 21A) mit der Umfangsrille (3) in Verbindung steht.

6. Reifen (1) nach einem der Ansprüche 1 bis 5, wobei jeder der Vielzahl von Blöcken (10) eine Vielzahl der ersten Feinschnitte (11A) aufweist.

7. Reifen (1) nach einem der Ansprüche 1 bis 6, wobei der erste Feinschnitt (16A) sich in einer Längsrichtung so erstreckt, dass er gebogen ist.

8. Reifen (1) nach einem der Ansprüche 1 bis 7, wobei die Feinschnitte (6, 11, 16, 21) ferner mindestens einen vierten Feinschnitt (6D, 11D, 16D, 21D) umfassen, der sich zwischen dem ersten Feinschnitt (6A, 11A, 16A, 21A) und dem dritten Feinschnitt (6C, 11C, 16C, 21C) in der Reifenaxialrichtung befindet.

9. Reifen (1) nach Anspruch 8, wobei ein Endabschnitt (21a) des ersten Feinschnitts (21A) und ein Endabschnitt (21b) des vierten Feinschnitts (21D) über eine Vielzahl von gebogenen Abschnitten davon zusammenpassen.

10. Reifen (1) nach einem der Ansprüche 1 bis 9, wobei jeder der Feinschnitte (6, 11, 16, 21) sich in einer Reifenradialrichtung nach innen so erstreckt, dass er in der Reifenumfangsrichtung zickzackförmig gebogen ist.

11. Reifen (1) nach einem der Ansprüche 1 bis 10, wobei die geneigten Rillen (4) umfassen
eine Vielzahl von ersten geneigten Rillen (4A), die sich zu einer Seite in der Reifenaxialrichtung relativ zu dem Reifenäquator (C) erstrecken, und
eine Vielzahl von zweiten geneigten Rillen (4B), die sich zu einer anderen Seite in der Reifenaxialrichtung relativ zu dem Reifenäquator (C) so erstrecken, dass sie in einer Richtung entgegengesetzt zu einer Richtung geneigt sind, in der jede der ersten geneigten Rillen (4A) geneigt ist.

## Revendications

1. Pneumatique (1) comprenant une portion formant bande de roulement (2), la portion formant bande de roulement (2) comprenant :
au moins une rainure circonférentielle (3) s'étendant en continu dans une direction circonférentielle du pneumatique le long d'un l'équateur de pneumatique (C) ;
une pluralité de rainures inclinées (4) s'étendant en continu depuis la rainure circonférentielle (3) jusqu'aux extrémités de bande de roulement (Te) ; et
une pluralité de blocs (5, 10, 15, 20) délimités chacun par la rainure circonférentielle (3), correspondant à quelques-unes des rainures inclinées (4), et à l'une des extrémités de bande de roulement (Te), dans lequel
chacun de la pluralité de blocs (5, 10, 15, 20) a une pluralité de fentes (6, 11, 16, 21) s'étendant le long des rainures inclinées (4),
la pluralité de fentes (6, 11, 16, 21) incluent au moins :
au moins une première fente (6A, 11A, 16A, 21A) située sur le côté de l'équateur de pneumatique (C), et
au moins une deuxième fente (6B, 11B, 16B, 21B) située sur l'extrémité de bande de roulement (Te), et
**caractérisé en ce que**
la pluralité de fentes (6, 11, 16, 21) incluent en outre
au moins une troisième fente (6C, 11C, 16C, 21C) située entre la première fente (6A, 11A, 16A, 21A) et la deuxième fente (6B, 11B, 16B, 21B) dans une direction axiale du pneumatique, et s'étendant dans une direction longitudinale de manière à être cintrée ;
une extrémité (6a) sur le côté de l'extrémité de bande de roulement (Te) de la troisième fente (6C, 11C, 16C, 21C) est située sur une ligne de prolongement de la deuxième fente (6B, 11B, 16B, 21B) ;
dans lequel une portion de rupture (7) est située entre chaque paire de fentes voisines de la pluralité de fentes (6, 11, 16, 21) et la longueur (L1) de chaque rupture est dans une plage allant de 2 à 6 mm.

2. Pneumatique (1) selon la revendication 1, dans lequel
la deuxième fente (6B, 11B, 16B, 21B)est en communication avec l'extrémité de bande de roulement (Te).

3. Pneumatique (1) selon la revendication 1 ou 2, dans lequel
la deuxième fente (6B, 11B, 16B, 21B) s'étend linéairement.

4. Pneumatique (1) selon l'une quelconque des revendications 1 à 3, dans lequel
la deuxième fente (6B, 11B, 16B, 21B) s'étend sur une ligne centrale dans la direction circonférentielle du pneumatique du bloc (5, 10, 15, 20).

5. Pneumatique (1) selon l'une quelconque des revendications 1 à 4, dans lequel
la première fente (6A, 11A, 16A, 21A) est en communication avec la rainure circonférentielle (3).

6. Pneumatique (1) selon l'une quelconque des revendications 1 à 5, dans lequel
chacun de la pluralité de blocs (10) a une pluralité de premières fentes (11A).

7. Pneumatique (1) selon l'une quelconque des revendications 1 à 6, dans lequel
la première fente (16A) s'étend dans une direction longitudinale de manière à être cintrée.

8. Pneumatique (1) selon l'une quelconque des revendications 1 à 7, dans lequel
les fentes (6, 11, 16, 21) incluent en outre au moins une quatrième fente (6D, 11D, 16D, 21D) située entre la première fente (6A, 11A, 16A, 21A) et la troisième fente (6C, 11C, 16C, 21C) dans la direction axiale du pneumatique.

9. Pneumatique (1) selon la revendication 8, dans lequel
une portion d'extrémité (21a) de la première fente (21A) et une portion d'extrémité (21b) de la quatrième fente (21D) correspondent l'une à l'autre par l'intermédiaire d'une pluralité de portions cintrées de celles-ci.

10. Pneumatique (1) selon l'une quelconque des revendications 1 à 9, dans lequel
chacune des fentes (6, 11, 16, 21) s'étendent vers l'intérieur dans une direction radiale du pneumatique de manière à être cintrée en zigzag dans la direction circonférentielle du pneumatique.

11. Pneumatique (1) selon l'une quelconque des revendications 1 à 10, dans lequel
les rainures inclinées (4) incluent
une pluralité de premières rainures inclinées (4A) s'étendant vers un côté dans la direction axiale du pneumatique relativement à l'équateur de pneumatique (C), et
une pluralité de secondes rainures inclinées (4B) s'étendant vers un autre côté dans la direction axiale du pneumatique relativement à l'équateur de pneumatique (C) de manière à être inclinées dans une direction opposée à direction dans laquelle chacune des premières rainures inclinées (4A) est inclinée.
